# EUROPEAN PATENT APPLICATION

(11) **EP 1 699 002 A1**
(43) Date of publication of application: **06.09.2006**
(21) Application number: 06004405.4
(22) Date of filing: 03.03.2006
(51) Int. Cl.: G06K 19/077, B32B 17/10, H01Q 1/12, B60J 1/02, G08B 13/24, H05K 5/00

(54) **Interlayer film member for panel, panel and electronic tag**

(30) Priority: 04.03.2005 JP 2005061632
(71) Applicant: Nippon Sheet Glass Company, Limited, Tokyo 105-8552 (JP)
(72) Inventor: Kokuryo, Kazuto, Shiga 520-2144 (JP); Ohara, Shohei, Minato-ku, Tokyo 105-8552 (JP); Matsushita, Yoshimitsu, Minato-ku, Tokyo 105-8552 (JP)
(74) Representative: HOFFMANN EITLE

(57) **Abstract**

An electronic tag is coated with a coating material so that an upper portion of an insulation film is embedded in the coating material on the periphery of a semiconductor chip. This electronic tag is applied to a target object to be controlled such as a laminated glass which is fabricated by joining base materials together. A glass panel, which is a laminated glass, has a first sheet glass and a second sheet glass which are disposed so that main surfaces thereof are made to face each other and an interlayer film member which is disposed between the first sheet glass and the second sheet glass. In addition, the electronic tag coated with the coating material is disposed between the interlayer film member and the second sheet glass.

## Description

### BACKGROUND OF THE INVENTION

### 1. Field of the Invention

The present invention relates to an interlayer film member used as an interlayer film of a panel obtained by joining a plurality of base materials together, a panel obtained by joining a plurality of base material together and an electronic tag which is incorporated in a target object to be controlled such as the panel and the like.

### 2. Related Art

In recent years, management technologies making use of electronic tags (also referred to as radio frequency identification or RFID tags) have been spreading. Electronic tags are used in such a state that they are affixed to surfaces of products by means of adhesive or pressure sensitive adhesive double coated tapes. It is proposed that electronic tags be attached to a wide range of articles from small items such as parcels to consumer durables such as automobiles and domestic building materials so as to obtain various types of information therefrom via radio communication for use for control the articles.

For example, JP-2004-326573A discloses a motor vehicles control system in which electronic tags in each of which individual vehicle identifying information is written are attached to motor vehicles so as to control them by making such individual vehicle identifying information written in the tags.

As in the system disclosed in JP-2004-326573A, for example, in a case where an electronic tag is attached to a target object to be controlled such as a motor vehicle, it is easy to be handle when affixed to a surface of the target object to be controlled. However, the electronic tag can easily be removed from the surface of the target object to be controlled, and there exists a possibility where the affixed electronic tag may be replaced with another electronic tag by a person who has an evil intention. Alternatively, it is considered that the electronic tag is damaged by an external factor.

In order to prevent the removal of the electronic tag from the target object to be controlled, for example, the electronic tag may be designed to be held between constituent components of the target object to be controlled. However, in general, the electronic tag is constructed such that a core chip is formed on a film base on a surface of which an antenna is formed. Due to this, when holding the electronic tag between the constituent components of the target object to be controlled, in the event that an excessive pressure is applied to a portion of the film base where the core chip is formed, there will be caused a risk where the core chip is caused to be embedded in the film base to thereby break the antenna.

### SUMMARY OF THE INVENTION

The invention was made in view of the atoresaid problem, and an object thereof is to make it difficult for an electronic tag that is attached or used in such a state that an external pressure is exerted thereon to be broken or to provide such an electronic tag. Another object of the invention is to provide an interlayer film member which facilitates the use of the electronic tag when the tag is used. Further, the invention provides a panel in which a electronic tag is mounted and which is suitably mounted to a vehicle body as a window panel like windshield.

According to an aspect of the invention, there is provided an electronic tag coated with a coating material so that an uneven surface thereof is embedded in the coating material. According to this aspect of the invention, even in case the electronic tag is held between base materials, the concentration of pressure onto a raised portion of the electronic tag can be suppressed. In addition, since the indented portion of the electronic tag is embedded in the coating material, the generation of bubbles can be suppressed which would otherwise be caused by virtue of intrusion of air between the indented portion of the electronic tag and an interlayer film when attempting to bond the electronic tag to the interlayer film. As a result, the adhesion properties between the electronic tag and the inteilaxer film are increased. In addition, since the electronic tag that is suitably held between base materials can be produced by using a general purpose electronic tag, a reduction in production cost can be realized compared to a case where an exclusive electronic tag is produced which is suited to being held between base materials.

The electronic tag may be coated with the coating material so that the indented portion and a raised portion on the uneven surface are shaped smoothly with the coating material. In addition, the electronic tag may be coated with the coating material so that corner portions of the raised portion on the uneven surface are covered with the coating material. According to these configurations, even when the electronic tag is held between base materials, the concentration of pressure onto the raised portion or the corner portions of the raised portion can be suppressed.

The electronic tag may be coated with the coating material so as to realize an external shape which becomes thinner toward a periphery thereof. According to this configuration, when the electronic tag is attached to an interlayer film, gaps that would be generated on the periphery of the coating material can be reduced.

The electronic tag may be coated with the coating material so that the thickness of an edge portion of the coating material becomes smaller than the thickness of an edge portion of the electronic tag. According to this configuration, when the electronic tag is attached to an interlayer film, gaps that would be generated on the periphery of the coating material can be reduced further.

According to another aspect of the invention, there is provided an interlayer film member used as an intermediate layer of a panel obtained by joining base materials together, wherein an electronic tag coated with a coating material is embedded in an interior of the interlayer film member. According to this aspect of the invention, since the electronic tag is embedded in advance in the interlayer film member which is necessary for fabrication of the panel, the control of the panel is facilitated. In addition, since the electronic tag is coated with the coating material, the electronic tag is advantages in strength and positional stability.

The coating material may be the same as a material used for the interlayer film member. According to this configuration, the degree of bonding to the interlayer film member is increased. In addition, the interlayer film member may be made up of a plurality of interlayer films which are assembled together, and the electronic tag coated with the coating material may be embedded in the interlayer film member so as to be held between the plurality of interlayer films.

According to a further aspect of the invention, there is provided a panel having a plurality of base materials which are disposed so that main surfaces thereof are made to face each other, an interlayer film member disposed between the plurality of base materials, so as to join the plurality of base materials together, and an electronic tag disposed between the plurality of base materials, wherein the electronic tag has an uneven surface and is coated with a coating material so that an indented portion on the uneven surface is embedded in the coating material. According to this aspect of the invention, since the indented portion of the electronic tag is embedded in the coating material, the generation of bubbles can be suppressed which would otherwise be caused by virtue of intrusion of air between the indented portion of the electronic tag and the interlayer film when attempting to bond the electronic tag to the interlayer film. As a result, the adhesion properties between the electronic tag and the interlayer film are increased. Note that the main surfaces of the base materials mean surfaces of the base materials which are joined together when the panel is made by joining the base materials together.

The electronic tag may be coated with the coating material so that the indented portion and a raised portion on the uneven surface are shaped smoothly with the coating material. In addition, the electronic tag may be coated with the coating material so that corner portions of the raised portion on the uneven surface are covered with the coating material. Furthermore, the electronic tag may be coated with the coating material so as to realize an external shape which becomes thinner toward a periphery thereof.

The electronic tag has a flat surface, the flat surface being covered with the coating material. According to this configuration, the strength of the flat surface of the electronic tag which is also increased. In addition, the electronic tag may be coated with the coating material so that the thickness of an edge portion of the coating material becomes smaller than the thickness of an edge portion of the electronic tag.

The electronic tag may have a flat surface, the flat surface being brought into abutment with the base material. According to this configuration, the electronic tag can be disposed in such a state that the electronic tag becomes stable relative to the base material.

The base material may be a sheet glass which is chaped into an automotive windshield. According to this configuration, even in a glass panel such as an automotive windshield in which an interlayer film member is held between two sheet glasses which are bonded together, the electronic tag can be disposed in an interior of the laminated glass while suppressing a breakage of the electronic tag.

Further, according to another aspect of the invention, there is provided a window panel adapted to be mounted in a vehicle body, including:
a plurality of base materials which are disposed so that main surfaces thereof are made to face each other;
an interlayer film member disposed between the plurality of base materials, so as to join the plurality of base materials to each other; and
an electronic tag disposed between the plurality of base materials; wherein
the electronic tag has an uneven surface and is coated with a coating material so that an indented portion on the uneven surface is embedded in the coating material.

Note that what results from appropriate combinations of the constituent elements described in the respective aspects of the invention can be contained within the scope of the invention that is to be patented through this patent application.

According to the invention, the electronic tag is made difficult to be broken even in case the tag is attached or used in such a state that an external pressure is exerted thereon.

### BRIEF DESCRIPTION OF THE DRAWINGS

Fig. 1 is a sectional view of a glass panel according to an embodiment of the invention;
Figs. 2A to 2C which show external appearances of an electronic tag used in the glass panel, Fig. 2A is a plan view thereof, Fig. 2B is a front view thereof, and Fig. 2C is a side view thereof.
Fig. 3 is a block diagram which illustrates the functional configuration of a semiconductor chip which makes up the electronic tag used in the glass panel shown in Fig. 1.
Fig. 4 is a sectional view of a glass panel according to another embodiment of the invention.

### DETAILED DESCRIPTION OF THE PREFERRED EMBODIMENTS

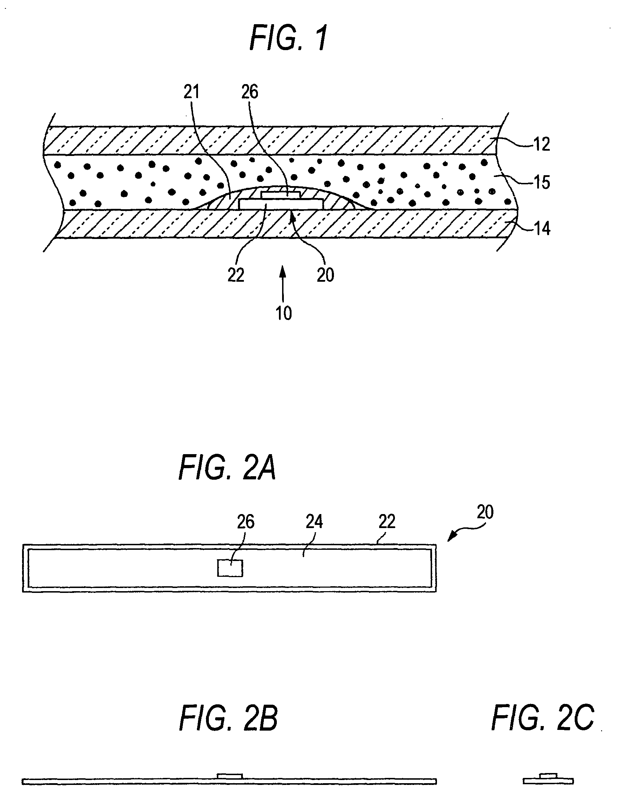

Referring to Figs. 1 to 3, a glass panel 10 according to an embodiment of the invention will be described in which sheet glasses are used as base materials. Note that a panel interlayer film member 15 according to the embodiment of the invention and an electronic tag 20 according to the embodiment of the invention will also be described as constituent parts of the glass panel 10 during the description of the glass panel 10.

Fig. 1 shows a cross section of the glass panel 10 according to the embodiment of the invention. Note that since the purpose of this drawing is to describe a positional relationship of respective constituent members, a thickness direction is exaggerated, and hence, the drawing is not necessarily such as to represent an actual dimensional relationship of the respective constituent members. The glass panel 10 is a so-called laminated glass in which two sheet glasses are heated and contact bonded under pressure for lamination with an interlayer film held therebetween. Since the laminated glass is such that the two sheet glasses are bonded together with high strength via the interlayer film, the laminated glass is made difficult to be spread in glass fragments when broken. Note that the sheet glass means a glass having a main surface so that an electronic tag can be held by two sheet glasses, and for example, an elongate rod-shaped glass having a rectangular cross section is also contained in the sheet glass.

The glass panel 10 includes a first sheet glass 12, a second sheet glass 14, an interlayer film member 15, an electronic tag 20, and a coating material 21. The first and second sheet glasses 12, 14 are flat plate-shaped glasses which are disposed in such a state that main surfaces thereof are made to face each other. In addition, the first and second glass sheets 12, 14 may be glasses which are formed into a moderately curved shape as of an automotive windshield.

The interlayer film member 15 is disposed between the first sheet glass 12 and the second sheet glass 14. In addition, the thickness of the interlayer film member 15 is such as those of interlayer films which are marketed as interlayer films for automotive laminated glasses; that is, for example, 0.38mm or 0.76mm, and the interlayer film member 15 is inserted between the first and second glass sheets 12, 14 over the full extent thereof. Functions such as noise insulating function, coloring function, and ultraviolet ray cutting function can be imparted to the glass panel 10 by the interlayer film member 15.

The interlayer film member 15 has a function to join together the first sheet glass 12 and the second sheet glass 14 by being interposed between the first sheet glass 12 and the second sheet glass 14. The interlayer film member 15 is made of a tough resin such as polyvinyl butyral or PVB. Note that the interlayer film member 15 may be made up of a plurality of interlayer films which are assembled together. In this event, the electronic tag 20, which is coated with the coating material, can be held between the plurality of interlayer films.

The electronic tag 20 transmits through radio communication identification information recorded in an interior thereof as a reply to a request made from the outside. The construction of the electronic tag 20 will be described in detail later on. The electronic tag 20 is coated with the coating material 21 so that an indented portion on a uneven surface thereof, that is, an upper portion of an insulation film 22 which lies on the periphery of a semiconductor chip 26 is embedded in the coating material 21. In addition, the electronic tag 20 is coated with the coating material 21 so that the indented portion and a raised portion on the uneven surface, that is, a portion where the semiconductor chip 26 is provided and a portion where the insulation film 22 lies on the periphery of the semiconductor chip 26 are shaped smoothly with the coating material 21. Furthermore, the electronic tag 20 is coated with the coating material 21 so that corner portions of the raised portion on the uneven surface, that is, corner portions of the semiconductor chip 26 are covered with the coating material 21. Due to this, pressure exerted on the electronic tag 20 when it is embedded in the interlayer film member 15 or pressure exerted on the electronic tag 20 during a manufacturing process of a laminated glass can be restrained from being concentrated onto the semiconductor chip 26 or the corner portions thereof.

The coating material 21 is made of, for example, a resin. The coating material 21 may be made of the same material as that used for the interlayer film member 15. According to this configuration, the degree of bonding to the interlayer film member 15 is increased. In addition, the coating material 21 may be made of a harder material than the interlayer film member 15. By adopting this configuration, for example, when embedding the electronic tag 20 in the interlayer film member 15 or holding the tag between the base materials, a damage to the electronic tag 20 can be suppressed. By imparting an ultraviolet ray shielding function, an infrared ray shielding function or an anti-oxidizing function to the coating material 21, the deterioration of the electronic tag 20 embedded in the interior of the coating material 21 may be prevented. In addition, when the plurality of interlayer films are used, a plurality of functions can be imparted to the glass panel 10 by imparting different functions to the respective interlayer films.

The electronic tag 20 coated with the coating material 21 can be obtained, for example, by a method in which the coating material 21 in the form of liquid is coated or dropped on the electronic tag 20 and the coating material 21 so coated or dropped is caused to set thereafter, a method in which the electronic tag 20 is embedded in the coating material 21 in the form of liquid which is filled in a mold and the coating material 21 is molded and set thereafter, or a method in which the electronic tag 20 is embedded in the coating material 21 which is softened by the application of heat or the like and thereafter, the coating material 21 is cooled to set.

In addition, the electronic tag 20 is coated with the coating material 21 so as to realize an external shape which becomes thinner toward the periphery thereof. As examples of the shape of the electronic tag 20 coated with the coating material 21, in addition to the shape of a dome as shown in Fig. 1, the electronic tag 20 may be formed into a sphere, an ellipsoid of revolution and the like. Due to this, when the electronic tag 20 coated with the coating material 21 is held between the interlayer film member 15 and the second sheet glass 14 or the plurality of interlayer films, gaps formed on the periphery of the coating material 21 can be reduced. Consequently, for example, when a laminated glass is produced by holding the electronic tag 20 by the plurality of interlayer films, bubbles are made difficult to be generated on the periphery of the electronic tag 20 coated with the coating material 21.

In addition, the electronic tag 20 is coated with the coating material 21 so that the thickness of an edge portion of the coating material 21 becomes smaller than the thickness of an edge portion of the electronic tag 20 or the thickness of the insulation film 22. Due to this, in the glass panel 10, bubbles are made more difficult to be generated on the periphery of the electronic tag 20 coated with the coating material 21. Note that it is preferable that the thickness of the edge portion of the coating material 21 is reduced to approach zero. In addition, a flat surface of the electronic tag 20, that is, a surface of the insulation film 22 on which the semiconductor chip 26 is not provided is brought into abutment with the second sheet glass 14. Due to this, the electronic tag 20 is disposed in such a state that the electronic tag 20 becomes stable relative to the second sheet glass 14. Note that the electronic tag 20 may be embedded in the interior of the interlayer film member 15.

Additionally, since the electronic tag 20 is advantageous in strength and stability when it is held by the base materials when the tag is coated with the coating material 21, the shape is not necessarily inevitable in which the thickness is reduced toward the periphery thereof. In this sense, the external shape may be formed into a rectangular prism and a circular cylinder. Note that the electronic tag 20 coated with the coating material 21 can constitute a target object to be marketed as it is.

Figs. 2A to 2C show external appearances of the electronic tag 20, wherein Fig. 2A is a plan view, Fig. 2B a front view and Fig. 2C a side view of the electronic tag 20. The electronic tag 20 includes the insulation film 22 which is formed into a strip-like shape, an antenna 24 formed on a side of the insulation film for transmitting and receiving radio waves such as microwaves and the semiconductor chip 26 which is a radio chip which is connected to the antenna 24 and which transmits predetermined data as a reply to a request made from the outside through radio communication via the antenna 24.

The electronic tag 20 is configured such that data are stored in a memory circuit within the semiconductor chip 26, so that the data so stored can be read out in a non-contact fashion by radio waves such as microwaves or UHF waves. Due to this, in general, the electronic tag 20 can store a large volume of data compared to bar codes or two-dimensional bar codes. In addition, since the electronic tag 20 is different from bar codes or two-dimensional bar bodes in that it is not a printed matter, it is difficult to alter the data stored therein.

The antenna 24 is formed by coating on the resin insulation film 22 a conductive material such as a conductive paste made of mainly copper or silver. The antenna 24 is designed so as to transmit and receive a radio wave of a specific frequency such as a microwave of 2.45GHz with good efficiency. While one example of the shape of the antenna is a loop, the antenna 24 may be formed into other shapes.

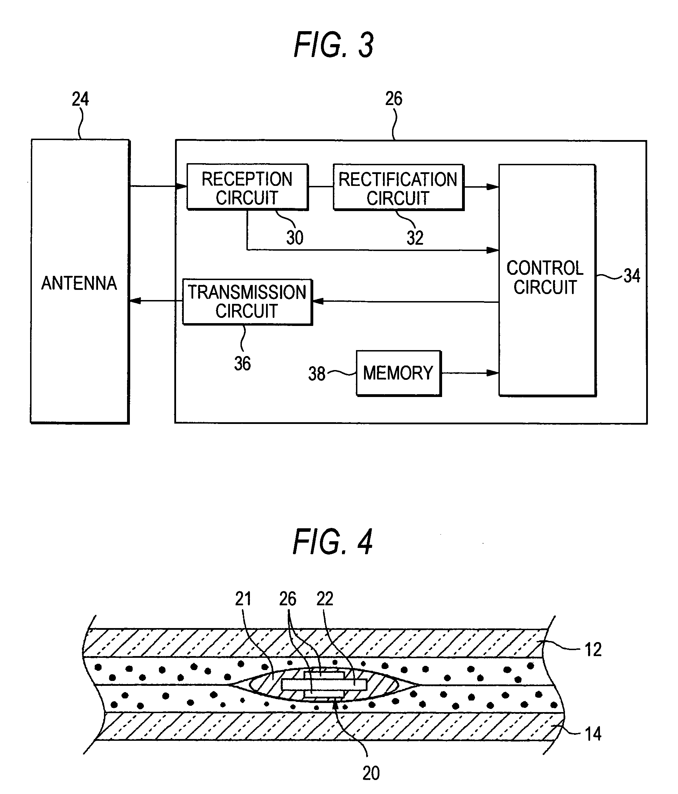

The semiconductor chip 26 is fabricated by, for example, forming a circuit as illustrated in a functional block diagram shown in Fig. 3, which will be described later on, on a single crystal silicone substrate. Since the electronic tag 20 is configured such that the thin antenna 24 is formed on the side of the insulation film 22, the tag becomes thin and flexible.

The semiconductor chip 26 is a so-called passive semiconductor chip which is driven using an electromotive force generated by radio waves received from the outside. Since the passive radio chip like this can be made smaller than an active one having a power supply incorporated therein by such an extent that the former has no power supply incorporated therein, even in the event that the passive radio chip is provided on an article such as the glass panel 10 in which the external appearance is important, the aesthetic appearance of the glass panel 10 is not damaged badly.

Fig. 3 is a block diagram which illustrates the functional configuration of the semiconductor chip 26. The semiconductor chip 26 includes a reception circuit 30, a rectification circuit 32, a control circuit 34, a transmission circuit 36 and a nonvolatile memory 38. The reception circuit 30 outputs a radio wave received by the antenna 24 to the rectification circuit 32 and generates a clock signal from the radio wave received by the antenna 24 for output to the control circuit 34. The rectification circuit 32 rectifies the radio wave transmitted from the reception circuit 30 and converts the radio wave so rectified into electric power which constitutes a drive source for the control circuit 34, outputting the electric power so converted to the control circuit 34.

When the clock signal is inputted thereinto from the reception circuit 30, the control circuit 34 fetches predetermined data from the memory 38 and outputs a information signal corresponding to the data so fetched together with a transmission signal to the transmission circuit 36. The transmission circuit 36 modulates the transmission signal inputted from the control circuit 34 with the information signal and transmits the signal so modulated to the outside via the antenna 24. The signal so transmitted is received by read equipment (not shown) placed at an external side.

At least a specific identification number is written in the memory 38, and in addition to the number, various types of data can be stored in the memory 38. The identification number can be used to control the glass panel 10 in which the electronic tag 20 is provided through radio transmission of the number. As examples of data that are stored in the memory 38, there are raised production-related attributes such as production number, production period, production site, production process and distribution history, as well as production-related attributes such as constituents or functions of glass. However, the data to be stored in the memory 38 are not limited thereto.

In the semiconductor chip 26, various kinds of frequencies which are used in general can be used, and radio waves can be used whose frequencies include, for example, 135kHz, 13.56MHz, 433MHz, 869MHz, 915MHz or 2.45GHz. These radio waves has their own characteristics. Consequently, the electronic tag 20 is preferably used to match the characteristics of radio waves that are provided by the respective frequencies. For example, since a radio wave of 869MHz enables a long distance communication, the radio wave is convenient when used in such a state that the electronic tag 20 is distant from the read equipment. In addition, since the electronic tag 20 can be made smaller in size when designed to use a radio wave of 2.45GHz, the radio wave of that frequency is convenient when attempting to make the electronic tag 20 provided on the glass surface less noticeable.

While, in this embodiment, the semiconductor chip 26 is a read-only chip, a semiconductor chip such as an EEPROM which can both read and write. In the event of a semiconductor chip which can both read and write, in case it is designed that data can be added to the memory at each stage of a flow of distribution, the control of distribution history can be facilitated further.

The interlayer film member 15 which incorporates therein the electronic tag 20 coated with the coating material 21 is obtained by, for example, encapsulating the electronic tag 20 in a liquefied interlayer film member at a midway stage of an interlayer film production process and thereafter molding or forming the material into the interlayer film member. In addition, the interlayer film member 15 which incorporates therein the electronic tag 20 coated with the coating material 21 may be obtained by encapsulating the electronic tag 20 coated with the coating material 21 by a molten interlayer film and thereafter causing the molten film to set with the electronic tag 20 incorporated therein. The interlayer film member 15 incorporating therein the electronic tag 20 which is obtained as has been described above can constitute a target object to be marketed as it is.

In addition, the interlayer film member in which the electronic tag 20 coated with the coating material 21 is held by the plurality of interlayer films is manufactured in the following way. Firstly, the electronic tag 20 coated with the coating material 21 is disposed between two interlayer films. Following this, the electronic tag 20 is heated while being pressed by two press plates having larger areas than those of the two interlayer films so as to be held from external surfaces of the two interlayer films.

Note that depending on materials of the coating material 21 and the two interlayer films, the coating material 21 and the two interlayer films can be joined together by being pressed at a room temperature or being heated without being pressed. In addition, in the event that the coating material 21 is made of the same material as that of the interlayer film, the coating material 21 and the two interlayer films are easy to be fuoed together when they are attempted to be joined together, and boundaries between the coating material 21 and the two interlayer films are made difficult to be noticed within the glass panel 10.

The glass panel 10 is fabricated in the following manner. Firstly, the electronic tag 20 and the interlayer film member 15 are put to be held by the first sheet glass 12 and the second sheet glass 14. Following this, the first and second glass sheets 12, 14 are heated while compressing the interlayer film member 15 and the electronic tag 20 from both sides thereof, and pressures in voids formed between the first and second glass sheets 12, 14 are reduced, whereby the first sheet glass 12 and the interlayer film member 15 and the interlayer film member 15 and the second sheet glass 14 are joined together, respectively, so that the glass panel 10 which is a single laminated glass as shown in Fig. 1 is formed.

Thus, while the embodiment has been described based on the embodiment heretofore, the invention is not limited thereto, and hence, the invention can be altered or modified in design or the like variously based on knowledge of those skilled in the art, and embodiments resulting from those alterations or modifications are included in the scope of the invention.

For example, in the event that the electronic tag 20 is constructed to have semiconductor chips 26 on both sides of the insulation film 22, the both sides of the insulation film 22 are desirably coated with the coating material 21 as shown in Fig. 4. In this event, when the electronic tag 20 coated with the coating material 21 is held by two interlayer films, gasp are made difficult to be produced on the periphery of the coating material 21.

In addition, while, in the embodiment, the side of the electronic tag 20 or the insulation film 22 on which the semiconductor chip 26 is not provided is brought into abutment with the second sheet glass 14, instead of this, the side of the insulation film 22 on which the semiconductor chip 26 is not provided may be coated with the coating material 21. As this occurs, it is preferable that the thickness of the edge portion of the coating material 21 becomes smaller than the thickness of the insulation film 22.

Additionally, while, in the embodiment, the electronic tag 20 coated with the coating material 21 is used in the laminated glass, the electronic tag 20 coated with the coating material 21 can be applied to other items than the laminated glass. For example, in a target object to be controlled such as a laminated lumber for use in building a house or the like, for example, the electronic tag 20 coated with the coating material 21 can be inserted between surfaces of constituent lumbers which are laminated together.

In addition, the laminated glass may be fabricated by coating the electronic tag 20 with the coating material 21 in such a state that the electronic tag 20 is disposed on the second sheet glass 14, placing the interlayer film member and the first sheet glass 12 thereon, and heating and contact bonding together the first and second sheet glasses 12, 14 and the interlayer film member.

In addition, in the glass panel 10 according to the embodiment of the invention, a shielding layer which prevents the transmission of light may be provided on at least either the first sheet glass 12 or the second sheet glass 14 so as to cover the electronic tag 20 to hide it thereunder. In this event, the color of the coating material 21 is preferably made identical to the color of the shielding layer, whereby the electronic tag 20 is integrated with the shielding layer and is hence made less noticeable, so that the aesthetic appearance of the glass panel 10 is not damaged badly even in the event that the electronic tag 20 is provided on the glass panel 10.

Furthermore, the interlayer film member 15 is constructed such that the electronic tag 20 coated with the coating material 21 is simply held by two interlayer films, and in the fabricating process of the glass panel 10, the coating material 21 and the two interlayer films may be joined together at the same time as the first and second sheet glasses 12, 14 and the two interlayer films are joined together.

Moreover, while, in the embodiment, it is assumed that the passive electronic tag is used as the electronic tag 20, an active electronic tag may be used instead which has its own power supply incorporated therein for transmission based on electric power generated by itself. In this event, the necessity of replacement of batteries can be obviated by providing a power supply which generates electric power by external light, for example.

In addition, in addition to the sheet glasses, a resin base material made of such as polycarbonate or a ceramic base material made of quartz or the like may be used as the base material. Furthermore, the panel may be made of a combination of the sheet glass and the resin base material, a combination of the sheet glass and the ceramic base material, or a combination of the resin base material and the ceramic base material. Note that in the event that polycarbonate is used for the base material, ethylene vinyl acetate copolymer or EVA is generally used as the interlayer film member.

In addition, the visible light transmission of the base material is not a matter of interest. The base material may be translucent as in a frosted glass or may be opaque so that no light is transmitted therethrough.

## Claims

1. An electronic tag comprising:
an uneven surface having at least one indented portion,
wherein said electric tag is coated with a coating material so that the indented portion is embedded in the coating material.

2. An electronic tag according to Claim 1, wherein the electronic tag is coated with the coating material so that the indented portion and a raised portion on the uneven surface are shaped smoothly with the coating material.

3. An electronic tag according to Claim 1 or 2, wherein the electronic tag is coated with the coating material so that a corner portion of the raised portion on the uneven surface is covered with the coating material.

4. An electronic tag according to any of Claims 1 to 3, wherein the electronic tag is coated with the coating material so as to form an external shape which becomes thinner toward a periphery thereof.

5. An electronic tag according to any of Claims 1 to 4, wherein the electronic tag is coated with the coating material so that a thickness of an edge portion of the coating material becomes smaller than a thickness of an edge portion of the electronic tag.

6. An interlaver film member inserted in a panel obtained by joining base materials to each other, wherein an electronic tag coated with a coating material is embedded in an interior of the interlayer film member.

7. An interlayer film member according to Claim 6, wherein the coating material is the same as a material used for the interlayer film member.

8. An interlayer film member according to Claim 6 or 7, wherein the interlayer film member is made up of a plurality of interlayer films which are assembled together, and wherein the electronic tag coated with the coating material is embedded in the interlayer film member so as to be held between the plurality of interlayer films.

9. An interlayer film member according to any of Claims 6 to 8, wherein a material used for the interlayer film member includes PVB resin.

10. An interlayer film member according to Claim 6 or 9, wherein the interlayer film member is provided with at least one of noise insulating function, coloring function and ultraviolet ray cutting function.

11. A panel comprising:
a plurality of base materials which are disposed so that main surfaces thereof are made to face each other;
an interlayer film member disposed between the plurality of base materials, so as to join the plurality of base materials to each other; and
an electronic tag disposed between the plurality of base materials; wherein
the electronic tag has an uneven surface and is coated with a coating material so that an indented portion on the uneven surface is embedded in the coating material.

12. A panel according to Claim 11, wherein the electronic tag is coated with the coating material so that the indented portion and a raised portion on the uneven surface are shaped smoothly with the coating material.

13. A panel according to Claim 11 or 12, wherein the electronic tag is coated with the coating material so that corner portions of the raised portion on the uneven surface are covered with the coating material.

14. A panel according to any of Claims 11 to 13, wherein the electronic tag is coated with the coating material so as to realize an external shape which becomes thinner toward a periphery thereof.

15. A panel according to any of Claims 11 to 14, wherein the electronic tag has a flat surface, the flat surface being covered with the coating material.

16. A panel according to any of Claims 11 to 15, wherein the electronic tag is coated with the coating material so that the thickness of an edge portion of the coating material becomes smaller than the thickness of an edge portion of the electronic tag.

17. A panel according to any of Claims 11 to 16, wherein the electronic tag has a flat surface, the flat surface being brought into abutment with the base material.

18. A window panel adapted to be mounted in a vehicle body, comprising:
a plurality of base materials which are disposed so that main surfaces thereof are made to face each other;
an interlayer film member disposed between the plurality of base materials, so as to join the plurality of base materials to each other; and
an electronic tag disposed between the plurality of base materials; wherein
the electronic tag has an uneven surface and is coated with a coating material so that an indented portion on the uneven surface is embedded in the coating material.

19. A window panel according to Claim 18, wherein the electronic tag is mounted on one of the base materials so that the electronic tag is coated with the coating material on said one of the base materials.
